# EUROPÄISCHE PATENTSCHRIFT

(11) **EP 3 122 582 B1**
(45) Veröffentlichungstag und Bekanntmachung des Hinweises auf die Patenterteilung: **02.06.2021**
(21) Anmeldenummer: 15713367.9
(22) Anmeldetag: 24.02.2015
(51) Int. Cl.: B60J 3/00

(54) **VERKLEIDUNGSELEMENT EINES FAHRZEUGDACHS MIT GLASTRÄGER**
PANEL ELEMENT ON A GLASS CAR SUN ROOF
PANNEAU ÉLÉMENT D' UN TOIT OUVRANT EN VERRE

(30) Priorität: 25.03.2014 DE 202014101393 U
(43) Veröffentlichungstag der Anmeldung: 01.02.2017
(73) Patentinhaber: Webasto SE, 82131 Stockdorf (DE)
(72) Erfinder: DEPPE, Michael, 82131 Stockdorf (DE)
(74) Vertreter: advotec.
(86) Internationale Anmeldenummer: PCT/DE2015/100076
(87) Internationale Veröffentlichungsnummer: WO 2015/144127

(56) Entgegenhaltungen:
- EP-A1- 1 310 823
- WO-A1-88/01230
- WO-A1-2010/084092
- WO-A1-2013/122181
- DE-A1- 10 151 156
- DE-A1-102004 007 988
- DE-A1-102011 107 699
- DE-C1- 19 918 150
- US-A- 3 775 226
- US-A1- 2004 160 090
- US-A1- 2011 007 388
- US-A1- 2013 300 146

## Beschreibung

Die Erfindung betrifft ein flächiges Verkleidungselement eines Fahrzeugdachs mit den Merkmalen des Oberbegriffs des Anspruchs 1.

Ein derartiges flächiges Verkleidungselement ist aus der Praxis bekannt gemäß Stand der Technik Dokumenten WO88/01230 und US 2004/0160090, und kann als Deckelelement einer Schiebedachanordnung ausgebildet sein. Das Deckelelement umfasst eine Trägerplatte aus einer Glastafel, an deren Unterseite eine Splitterschutzfolie aufgeklebt ist. Die Splitterschutzfolie verhindert, dass im Falle einer Zerstörung bzw. Beschädigung der Glastafel keine Glassplitter bzw. -scherben in den Fahrzeuginnenraum und damit auf Fahrzeuginsassen fallen. Vielmehr gewährleistet die Splitterschutzfolie, dass der Verbund aus der Trägerplatte und der Splitterschutzfolie auch bei gebrochener bzw. gesplitterter Glastafel erhalten bleibt.

Bei dem vorstehend beschriebenen Deckelelement einer Schiebedachanordnung besteht das Problem, dass bei intensiver Sonnenstrahlung über das Fahrzeugdach ein hoher Wärmeeintrag in den Fahrzeuginnenraum stattfinden kann.

Der Erfindung liegt die Aufgabe zugrunde, ein flächiges Verkleidungselement der einleitend genannten Gattung zu schaffen, das hinsichtlich eines möglichen Wärmeeintrags in den Innenraum des betreffenden Fahrzeugs optimiert ausgebildet ist.

Diese Aufgabe ist erfindungsgemäß durch das flächige Verkleidungselement eines Fahrzeugdachs mit den Merkmalen des Anspruchs 1 gelöst.

Der Kern der Erfindung besteht mithin darin, dass die Verbundfolienanordnung, die die Splitterschutzfolie bildet, zumindest eine erste Kunststofffolie und eine zweite Kunststofffolie umfasst, von denen zumindest eine an der der anderen Kunststofffolie zugewandten Seite mit einer Beschichtung versehen ist, die zur Absorption und/oder Reflektion von Infrarotstrahlung und/oder UV-Strahlung dient.

Bei dem Verkleidungselement nach der Erfindung ist die Verbundfolienanordnung durch einfaches Verbinden, das heißt Laminieren bzw. Verkleben der beiden Kunststofffolien herstellbar. Weitere Laminier- bzw. Klebeprozesse zum Anbinden einer Infrarotstrahlung und/oder UV-Strahlung absorbierenden oder reflektierenden Schicht sind nicht erforderlich. Damit zeichnet sich die Verbundfolienanordnung des Verkleidungselements nach der Erfindung durch einen kostengünstigen Herstellungsprozess aus.

Die Beschichtung zur Absorption und/oder Reflektion von Infrarotstrahlung und/oder UV-Strahlung ist vorzugsweise aus mindestens einer organischen oder anorganischen Substanz gebildet, die auf der betreffenden Kunststofffolie abgeschieden ist. Beispielsweise kann die Beschichtung aus einem Edelmetall, wie Silber, einem Oxid oder einer organischen Verbindung gebildet sein.

Die Beschichtung ist vorzugsweise aus einer Aufdampfschicht oder einer Sputterschicht (Kathodenzerstäubung) gebildet.

Zumindest eine der beiden Kunststofffolien ist aus einer klaren Polyethylenterephthalat (PET)-Folie gebildet. Vorzugsweise sind die beiden miteinander verbundenen Kunststofffolien aus einem Polyethylenterephthalat (PET)-Werkstoff gebildet. Dieser ist zweckmäßigerweise extra klar ausgebildet, um eine hohe Transparenz des Verkleidungselements nach der Erfindung zu gewährleisten.

Die beiden Kunststofffolien, von denen zumindest eine mit der Beschichtung versehen ist, sind bei einer speziellen Ausführungsform der Vorrichtung miteinander verklebt oder nach einem sonstigen Laminierprozess miteinander verbunden.

Die Splitterschutzfolie ist gemäß Anspruch 1 der Erfindung, mit der Trägerplatte aus der Glastafel verklebt. Daher weist sie vorzugsweise eine Klebeschicht auf, über die sie an die Glastafel angebunden ist.

Um zu gewährleisten, dass das Verkleidungselement nach der Erfindung auch nach längerer Nutzung noch ein anmutendes optisches Erscheinungsbild hat, ist die Splitterschutzfolie bei einer vorteilhaften Ausführungsform an ihrer der Trägerplatte abgewandten Seite mit einer kratzfesten und/oder reißfesten Beschichtung versehen, die aus einer separaten auflaminierten Folie der Verbundfolienanordnung bestehen kann.

Die Trägerplatte, die aus der Glastafel gefertigt ist, kann mit einer Randumschäumung oder Randumspritzung versehen sein, die die Splitterschutzfolie übergreift. Zwischen der Randumschämung und der Splitterschutzfolie kann Stoffschluss und Formschluss vorliegen. Die Splitterschutzfolie verhält sich dann nach Art eines an den Rändern fest eingespannten Auffangnetzes, das etwaige Splitter der Trägerplatte vor einem Eindringen in den Fahrzeuginnenraum zurückhält.

Das Verkleidungselement nach der Erfindung kann ein Glasdeckel einer Schiebedachanordnung oder auch ein sonstiges karosseriefestes Element einer Fahrzeugdachanordnung sein.

Weitere Vorteile und vorteilhafte Ausgestaltungen ergeben sich aus der Beschreibung, der Zeichnung und den Ansprüchen.

Ein Ausführungsbeispiel eines flächigen Verkleidungselements nach der Erfindung ist in der Zeichnung schematisch vereinfacht dargestellt und wird in der nachfolgenden Beschreibung näher erläutert. Es zeigt:
- Figur 1: einen Schnitt durch einen seitlichen Randbereich eines Glasdeckels einer Schiebedachanordnung; und
- Figur 2: einen Schnitt durch eine Splitterschutzfolie des Glasdeckels nach Figur 1.

In der Zeichnung ist ein Glasdeckel 10 dargestellt, der Bestandteil eines Dachöffnungssystems eines Kraftfahrzeuges ist und zum Verschließen bzw. zumindest teilweisen Freigeben einer Dachöffnung eines Fahrzeugdaches dient. Der mithin ein flächiges Verkleidungselement eines Fahrzeugdachs darstellende Glasdeckel 10 umfasst eine Trägerplatte 12, die aus einer Glastafel gebildet ist und deren Oberseite eine äußere Sichtfläche des Verkleidungselements bildet. An ihrer Unterseite weist die transparente Trägerplatte 12 eine Splitterschutzfolie 14 auf, die dazu dient, bei einem Bruch der Glastafel zu verhindern, dass Glassplitter in einen Innenraum des betreffenden Fahrzeugs gelangen und dort Insassen verletzen können. Die Splitterschutzfolie 14 ist auf die Unterseite der Trägerplatte 12 aufgeklebt.

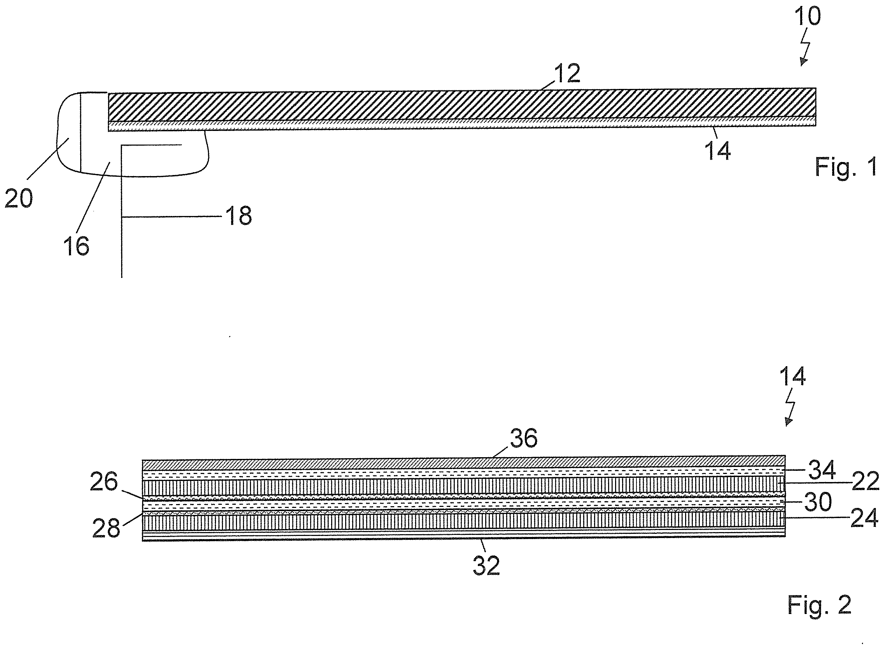

Die mit der Splitterschutzfolie 14 versehene Trägerplatte 12 ist an ihrem Rand umlaufend mit einer rahmenartigen Polyurethanumschäumung 16 versehen, die zur Anbindung von Funktionselementen, wie einem Deckelträger 18 dienen, über den der Glasdeckel 10 an eine Kinematik der Schiebedachanordnung angebunden ist. Zudem dient die Polyurethanumschäumung 16 als Träger für eine umlaufende Randspaltdichtung des Glasdeckels 10. Wie Figur 1 zu entnehmen ist, übergreift die Polyurethanumschäumung 16 einen Randstreifen der Splitterschutzfolie 14, so dass letztere in ihrem Randbereich eine zusätzliche mechanische Anbindung an die Trägerplatte 12 erfährt.

Die Splitterschutzfolie 14 ist aus einer Verbundfolienanordnung gebildet, die in Figur 2 anhand einer Schnittdarstellung detailliert dargestellt ist.

Die Verbundfolienanordnung, die die Splitterschutzfolie 14 bildet, umfasst eine Kernstruktur aus einer ersten Kunststofffolie 22 und einer zweiten Kunststofffolie 24, die jeweils aus einem extra klaren Polyethylenterephthalat (PET) -Werkstoff gefertigt sind. Beide Kunststofffolien 22 und 24 sind jeweils mit einer nach einem Kathodenzerstäubungsverfahren aufgebrachten Silberschicht 26 bzw. 28 versehen, die eine Beschichtung zur Absorption bzw. Reflektion von Infrarotstrahlung dient. Die beiden mit der Beschichtung 26 bzw. 28 versehenen Kunststofffolien 22 und 24 sind an den die Beschichtungen 26 und 28 tragenden Seiten über eine Klebeschicht 30 miteinander verbunden.

Auf der der Beschichtung 28 abgewandten Seite ist die Kunststofffolie 24 mit einer kratzfesten und/oder reißfesten Beschichtung 32 versehen, die aus einer weiteren Folie bestehen kann. Die Beschichtung 32 bildet die innenseitige Sichtfläche des Glasdeckels 10.

Zur Anbindung an die Trägerplatte 12 weist die Splitterschutzfolie an der der Beschichtung 32 abgewandten Seite eine weitere Klebeschicht 34 auf, die im Lieferzustand, das heißt vor dem Aufbringen der Splitterschutzfolie 14 auf die Trägerplatte 12 mit einer Schutzfolie bzw. Trennfolie 36 versehen ist.

### Bezugszeichenliste

- 10: Glasdeckel
- 12: Trägerplatte
- 14: Splitterschutzfolie
- 16: Polyurethanumschäumung
- 18: Deckelträger
- 20: Randspaltdichtung
- 22: Kunststofffolie
- 24: Kunststofffolie
- 26: Beschichtung
- 28: Beschichtung
- 30: Klebeschicht
- 32: Beschichtung
- 34: Klebeschicht
- 36: Trennfolie

## Patentansprüche

1. Flächiges Verkleidungselement eines Fahrzeugdachs, umfassend eine Trägerplatte (12) aus einer Glastafel, deren Oberseite eine äußere Sichtfläche des Verkleidungselements bildet und die an ihrer Innenseite mit einer Splitterschutzfolie (14) versehen ist, die eine Verbundfolienanordnung ist, **dadurch gekennzeichnet, dass** die Verbundfolienanordnung eine erste Kunststofffolie (22) und eine zweite Kunststofffolie (24) umfasst, die miteinander verbunden sind und von denen mindestens eine an der Fläche, die der anderen der beiden Kunststofffolien (22, 24) zugewandt ist, eine klebstofffrei und direkt aufgebrachte Beschichtung (26, 28) zur Absorption und/oder Reflektion von Infrarotstrahlung und/oder UV-Strahlung aufweist, wobei die Trägerplatte (12) mit einer Randumschäumung (16) oder Randumspritzung versehen ist, die die Splitterschutzfolie (14) übergreift, wobei die Splitterschutzfolie (14) eine Klebeschicht (34) aufweist, über die sie mit der Trägerplatte (12) verklebt ist.

2. Flächiges Verkleidungselement nach Anspruch 1, **dadurch gekennzeichnet, dass** die Beschichtung (26, 28) aus mindestens einer organischen oder anorganischen Substanz gebildet ist, die auf der betreffenden Kunststofffolie (22, 24) abgeschieden ist.

3. Flächiges Verkleidungselement nach Anspruch 1 oder 2, **dadurch gekennzeichnet, dass** die Beschichtung aus einem Edelmetall, insbesondere aus Silber gebildet ist.

4. Flächiges Verkleidungselement nach einem der Ansprüche 1 bis 3, **dadurch gekennzeichnet, dass** die Beschichtung (26, 28) aus einer Aufdampfschicht oder einer Sputterschicht gebildet ist.

5. Flächiges Verkleidungselement nach einem der Ansprüche 1 bis 4, **dadurch gekennzeichnet, dass** zumindest eine der beiden Kunststofffolien (22, 24) aus einem PET-Werkstoff gefertigt ist, der vorzugsweise klar ausgebildet ist.

6. Flächiges Verkleidungselement nach einem der Ansprüche 1 bis 5, **dadurch gekennzeichnet, dass** die beiden Kunststofffolien miteinander verklebt sind.

7. Flächiges Verkleidungselement nach einem der Ansprüche 1 bis 6, **dadurch gekennzeichnet, dass** die Splitterschutzfolie (14) an ihrer der Trägerplatte (12) abgewandten Seite mit einer kratzfesten und/oder reißfesten Beschichtung (32) versehen ist, die vorzugsweise aus einer Folie gebildet ist.

8. Flächiges Verkleidungselement nach einem der Ansprüche 1 bis 7, **dadurch gekennzeichnet, dass** es ein Glasdeckel (10) einer Schiebedachanordnung oder ein karosseriefestes Dachelement ist.

## Claims

1. A plate-like paneling element for a vehicle roof, comprising a support plate (12) consisting of a glass panel whose upper side forms an outer visible surface of the panelling element and whose inner side is provided with a shatter protection film (14) being a composite film arrangement, **characterised in that** the composite film arrangement comprises a first plastic film (22) and a second plastic film (24) which are connected to each other and at least one of which has a coating (26, 28) directly applied without an adhesive to the surface facing the other one of the two plastic films (22, 24) for absorbing and/or reflecting infrared radiation and/or UV radiation, the edge of the support plate (12) being provided with a foamed or injection-moulded edge encapsulation (16) overlapping the shatter protection film (14), the shatter protection film (14) having an adhesive layer (34) via which it is glued to the support plate (12).

2. The plate-like paneling element according to claim 1, **characterised in that** the coating (26, 28) is made of at least one organic or inorganic substance deposited on the respective plastic film (22, 24).

3. The plate-like paneling element according to claim 1 or 2, **characterised in that** the coating is made of a noble metal, in particular of silver.

4. The plate-like paneling element according to any one of claims 1 to 3, **characterised in that** the coating (26, 28) is made of a vapour-deposited layer or of a sputter layer.

5. The plate-like paneling element according to any one of claims 1 to 4, **characterised in that** at least one of the two plastic films (22, 24) is made of a PET material, which is preferably clear.

6. The plate-like paneling element according to any one of claims 1 to 5, **characterised in that** the two plastic films are glued together.

7. The plate-like paneling element according to any one of claims 1 to 6, **characterised in that** on its side facing away from the support plate (12), the shatter protection film (14) is provided with a scratch-poof and/or tear-proof coating (32), which is preferably made of a film.

8. The plate-like paneling element according to any one of claims 1 to 7, **characterised in that** it is a glass cover (10) of a sliding roof arrangement or a roof element fixed to a vehicle body.

## Revendications

1. Élément d'habillage plan d'un toit de véhicule, comprenant une plaque de support (12) consistant en un panneau de verre dont la face supérieure forme une surface visible extérieure de l'élément d'habillage et dont la face interne est pourvue d'un film pare-éclats (14) constituant un ensemble de films composite, **caractérisé en ce que** l'ensemble de films composite comprend un premier film en matière plastique (22) et un deuxième film en matière plastique (24) qui sont reliés l'un avec l'autre et parmi lesquels au moins un présente un revêtement (26, 28) appliqué sans adhésif et directement à la surface faisant face à l'autre film en matière plastique (22, 24) pour absorber et/ou refléter du rayonnement infrarouge et/ou du rayonnement UV, la bordure de ladite plaque de support (12) étant pourvue d'une encapsulation en mousse (16) ou d'une encapsulation moulée par injection chevauchant le film pare-éclats (14), ledit film pare-éclats (14) présentant une couche adhésive (34) par laquelle il est collé sur la plaque de support (12).

2. Élément d'habillage plan selon la revendication 1, **caractérisé en ce que** le revêtement (26, 28) est fabriqué à partir d'au moins une substance organique ou inorganique déposé sur le film en matière plastique (22, 24) respectif.

3. Élément d'habillage plan selon la revendication 1 ou 2, **caractérisé en ce que** le revêtement est fabriqué à partir d'un métal précieux, notamment d'argent.

4. Élément d'habillage plan selon l'une quelconque des revendications 1 à 3, **caractérisé en ce que** le revêtement (26, 28) est fabriqué à partir d'une couche déposée par vaporisation ou d'une couche déposée par pulvérisation.

5. Élément d'habillage plan selon l'une quelconque des revendications 1 à 4, **caractérisé en ce qu'**au moins un parmi les deux films en matière plastique (22, 24) est fabriqué à partir d'un matériau PET qui est de préférence transparent.

6. Élément d'habillage plan selon l'une quelconque des revendications 1 à 5, **caractérisé en ce que** les deux films en matière plastique sont collés l'un sur l'autre.

7. Élément d'habillage plan selon l'une quelconque des revendications 1 à 6, **caractérisé en ce que** le film pare-éclats (14), sur sa face détournée de la plaque de support (12), est pourvu d'un revêtement (32) qui est résistant aux rayures et/ou résistant aux déchirures et qui est de préférence fabriqué à partir d'un film.

8. Élément d'habillage plan selon l'une quelconque des revendications 1 à 7, **caractérisé en ce qu'**il est un couvercle en verre (10) d'un ensemble de toit ouvrant ou un élément de toit fixé sur la carrosserie du véhicule.
